Europäisches Patentamt

(19) European Patent Office

Office européen des brevets

(11) Publication number: **0 244 519**
**B1**

(12) # EUROPEAN PATENT SPECIFICATION

(45) Date of publication of the patent specification:
**05.12.90**

(51) Int. Cl.⁵: **G01N 19/04**

(21) Application number: **86303426.0**

(22) Date of filing: **06.05.86**

(54) Method for nondestructive testing of coating adhesion.

(43) Date of publication of application:
**11.11.87 Bulletin 87/46**

(45) Publication of the grant of the patent:
**05.12.90 Bulletin 90/49**

(84) Designated Contracting States:
**DE FR IT SE**

(56) References cited:
**GB-A- 1 287 731**
**GB-A- 2 166 876**
**US-A- 3 527 093**
**US-A- 3 628 378**
**US-A- 3 821 892**
**US-A- 4 381 248**
**US-A- 4 413 510**

**SOVIET INVENTIONS ILLUSTRATED, abstract no.
P8176 E/45, week E45, 22nd December 1982, Derwent
Publications, London, GB; & SU-A-896 517 (BRUK
A:M.) 11-04-1980**

(73) Proprietor: **Conoco Inc., 1000 South Pine Street P.O.
Box 1267, Ponca City Oklahoma 74603(US)**

(72) Inventor: **Ivie, Randall G., 106 Ranch Drive, Ponca City,
OK 74601(US)**
Inventor: **Thomason, William H., 2401 Meadowbrook,
Ponca City, OK 74604(US)**

(74) Representative: **Leale, Robin George et al, FRANK B.
DEHN & CO. Imperial House 15-19 Kingsway, London
WC2B 6UZ(GB)**

## Description

This invention relates to the art of materials testing and, more particularly, to a process for the nondestructive testing of coating adhesion to a substrate.

For many applications, the adhesion of an exterior coating to a substrate is extremely critical. Whether the coating is for electrochemical protection such as an anodic coating of flame sprayed aluminum on a steel offshore structure or to provide barrier protection or decorative enhancement such as a paint coating on a structure to be protected, it is critical that the adhesion of the coating to the substrate be within well defined limits, depending on the application, in order to provide the requisite protection desired of the coating. Any protective advantage afforded by a coating is quickly lost when the coating separates from the substrate.

In order that the tests be reliably reproducible, it is important that an adhesion tester apply purely tensile forces to the coating which are in a direction perpendicular to the coated surface. Any nonperpendicularly-directed forces can result in tearing of the coating and an inaccurate adhesion test reading.

U.S. Patent Number 3,821,892 describes an apparatus for testing intercoat adhesion. A dolly is bonded to the test material and a tractive force is applied to the dolly which is located between a two-legged support, the legs bearing against the coated surface. While this apparatus is adequate for testing coatings on a completely flat surface, any localized irregularities within the span of the legs or any curvature in the part being tested can cause a coating to tear. U.S. Patent Numbers 3,628,378 and 3,577,775 disclose apparatus of similar operation.

While the above-noted apparatus do provide an investigator with useful information regarding coating adhesion, the testing process, of necessity, results in the removal of at least a portion of the tested coating. Such coating removal thus at least partially destroys the usefullness of the article to which the coating is applied because of the destructive nature of the test. For this reason, coating adhesion tests on articles to be later placed in use must be made only in a very limited number of areas and only in those areas in which the break in the coating which is created does not present a critical problem.

UK Patent Number 1 287 731 and U.S. Patent Number 3 527 093 both describe apparatus for testing the adhesion of a surface coating to a substrate in which a tractive force limited to a predetermined value is applied to a dolly located between the legs of a three legged support. In UK 1 287 731 the force is applied through a shear pin which is arranged to shear when a predetermined load is applied and in US 3 527 093 the tractive force is applied to a predetermined level on a scale. However, in these apparatus also, the coating can be caused to tear if the dolly is applied to a surface which is not completely flat.

It is an object of this invention to provide a method whereby the adhesion of a coating to a substrate can be tested in a multiplicity of areas over an entire structure without destroying the desired protective properties of the coating and in which the aforementioned disadvantages may be avoided.

Viewed from one aspect the invention provides a method of testing an adhesive bond of a coating to a substrate, comprising providing a dolly, bonding said dolly to the coating with bonding means having a bond strength in excess of the strength of the adhesive bond between the coating and the substrate, attaching piston and cylinder means to the dolly, applying pressure to the piston and cylinder means to apply a tensional force to the dolly and coating and increasing the pressure to a predetermined, monitored pressure at which a tensile force applied to the dolly meets a minimum specification for said bond, said tensional force being limited to that which meets said minimum specification whereby destruction of the adhesive bond of the coating to the substrate may be avoided: characterised in that said dolly has a generally axially centered opening therethrough and said piston and cylinder means include a generally axially centered ram which passes through said dolly opening, said ram being forced into pressure engagement against the coating by said application of pressure to the piston and cylinder means and said increase in pressure to a predetermined, monitored pressure at which a tensile force applied to the dolly meets a minimum specification for said bond, the tensional force being limited to that which meets said minimum specification whereby destruction of the adhesive bond of the coating to the substrate may be avoided.

Advantageously the method includes a final step of causing the bonding means to fail so that the dolly can be removed without destruction of the coating.

At least in a preferred embodiment the present invention thus provides a method tensile adhesion testing of a coating to a substrate in which a force perpendicular to the tested material can be applied in a multiplicity of desired points on the tested structure in order to determine if the coating adhesion meets minimum specification requirements.

Certain embodiments of the invention will now be described, by way of example only, with reference to the accompanying drawings, wherein:

Figure 1 is a schematic, cross-sectional view of an adhesion tester used with a method in accordance with the invention;

Figure 2 is a perspective view of a dolly used in a preferred form of the apparatus employed in the method in accordance with the invention, and

Figure 3 shows an alternative form of dolly in the testing mode.

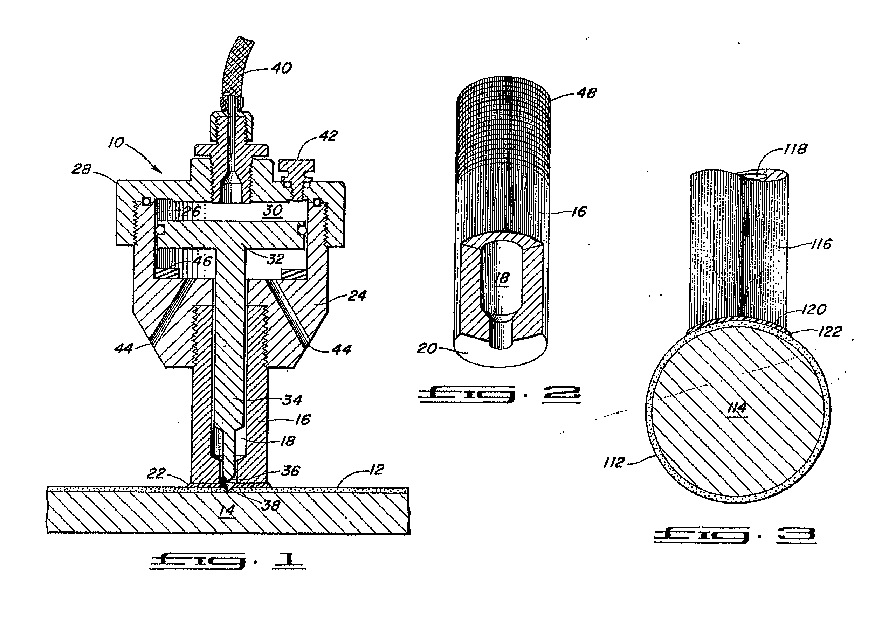

Referring now to the drawings, Figure 1 shows an adhesion tester 10 in position for testing the adhesive bond between a coating 12 and a substrate 14. It will be understood that the coating 12 may be any type of coating such as a paint, a plastic laminate, or a metal coating applied by any of several processes such as flame spraying, electroplating, and the like. Similarly, the substrate 14 may be e.g. wood, a polymeric material, or metal. For purposes of illustrating a preferred embodiment, the coating 12 comprises a flame sprayed aluminum coating on a substrate 14 of steel.

As shown in the drawings, a dolly 16 having an axially centered bore 18 and a bonding face 20 (Fig. 2) is provided. The dolly 16 is bonded on its bonding face 20 to the coating 12 with bonding means such as a layer of epoxy 22 extending between the surface of the coating 12 and the bonding face 20 of the dolly 16. Although the bonding means 22 is preferred to be an epoxy, any type of adhesive material may be used, the criteria for selection of a bonding material being that the adhesive strength of the bonding means 22 between both the coating 12 and the bonding face 20 of the dolly 16 exceeds the adhesive bond strength of the coating 12 to the substrate 14. As shown in the figures, the dolly is preferably cylindrical in form but, it will be understood that practice may dictate other forms which may be used so long as the bore 18 is centered generally axially in the dolly

After the dolly 16 has been securely bonded to the coating 12, the dolly is attached to the tester assembly 24. A portion of the tester assembly 24 includes a cylindrical inner surface 26 and a cap 28 defining a piston chamber 30. A piston 32 is disposed within the piston chamber 30 and has an axially centered ram 34 attached thereto and extending outwardly of the tester assembly 24 through the axially centered opening 18 of the dolly 16. The ram 34 is shown having a pointed end portion 36 which will engage the coating 12. The pointed form of the ram 34 is preferred if the formation of a dimple 38 in the coating 12 is not critical since the point 36 acts to positively locate the axially centered ram 34 so that a consistantly perpendicular tensional force is developed in the dolly 16. The minor dimple 38 left in the coating 12 would not present a critical destruction of the coating for applications such as flame sprayed aluminum coatings applied to steel structures for offshore cathodic protection since the minor holiday in the coating would be electrochemically protected by the remainder of the coating. However, in applications where dimpling of the coating is to be avoided such as in a decorative coating, the pointed end 36 of the ram 34 would need to be adapted to a blunt form which would not penetrate or dimple the coating 12.

Pressurized fluid is admitted to the piston chamber 30 through a conduit 40 which is attached to some type of fluid pressurizing means (not shown) such as a hydraulic pump, an air pump or the like. Various other features may be provided in the tester assembly such as a bleed off valve 42 for relieving pressure within the piston chamber 30 as well as various vent passages 44 for relieving pressure within the cylinder 26 on the side of the piston 32 opposite the piston chamber 30. Bump stops 46 may also be provided to limit the travel of the piston 32 and the ram 34.

In operation of the testing apparatus to test the tensile bond strength of the coating 12 through the substrate 14, pressurized fluid is admitted to the piston chamber 30 and the pressure is monitored by any common means. The pressure within the piston chamber 30 drives the piston 32 and its attached ram 34 into engagement with the surface of the coating 12. An increase in fluid pressure thus causes a tensional force to be developed in the dolly and, thereby, in the bonding means 22 and in the coating 12 as well. Because of the axially centered configuration of the ram 34 within the dolly 16, such tensional forces are applied perpendicular to the surface of the coating 12.

The testing of the coating adhesion continues by increasing the pressure within the piston chamber 30 while monitoring the increase in pressure. The ratio of the area of the piston 32 to the area of the bonding face 20 of the dolly 16 is known so that the minimum pressure within the piston chamber 30 required to meet the tensional coating adhesion specification of the coating 12 to the substrate 14 can be calculated. The fluid pressure in the chamber 30 is thus increased to that point and, assuming that the coating adhesion has not failed up to the point, it can be said that the coating meets the desired adhesion specification.

Figure 3 illustrates an alternative form of dolly 116 which has a bonding face 120 which is curved to conform to the shape of the surface of a circular member rather than a planer member as shown in the previous figures. The dolly 116 is bonded to the surface of a coating 112 on a substrate 114 utilizing bonding means 122 which may be any type as previously described with respect to the earlier figures. The dolly 116 has an axially centered bore 118 shown in phantom 4 accepting the ram 34 of the tester assembly 24 as previously described. It can be clearly seen that the axially centered nature of the ram 34 within the central bore 118 of the dolly 116 will cause the development of a perpendicular tensional force to test the adhesion of the coating 112 to the substrate 114.

Following the successful testing of the coating, the tester assembly 24 is removed from the dolly. In tested structures in which the presence of a dolly bonded to the surface of the coated structure would present no difficulty, the dolly 16 can be left bonded to the coating 12 and the structure can be placed in use. However, with most applications, it is desirable to remove the dolly 16 following a test.

In accordance with a preferred embodiment of the invention, a dolly 16 is removed from the coated 12 by causing the bonding means 22 to fail thereby leaving the coating 12 on the substrate 14 in tact. One preferred method for causing the bonding means 22 to fail is to heat it above a critical temperature at which point the dolly 16 may be removed. The heating may be carried out by any of several means such as direct application of heat to the bonding means 22 by a torch or, preferably, heating the remote, threaded end 48 (Fig. 2) so that heat is gradually conducted through the dolly 16 to the bonding face 20 and the bonding means 22 heated thereby to its critical temperature. This process minimizes the heating of the coating 12 on the substrate 14 which may in some way alter its protective properties.

The bonding means 22 may also be caused to fail by any other mechanism which is appropriate to the bonding means selected. Thus, a bonding means which is attacked by a solvent may be caused to release the dolly 16 by the application of such solvent to the bonding means 22. Fracture of a brittle bonding means 22 may also be possible which the application of a properly directed impact force if such impact will avoid damage to the coating 12.

EXAMPLE

The apapratus shown in Figures 1 and 2 was utilized to test the coating adhesion of a flame sprayed aluminium coating applied to a steel substrate. The minimum specification for adhesive bond strength between the aluminium coating and the steel substrate for offshore oil production risers is 70 kg cm$^{-2}$ (1,000 psi). The dolly face had a surface of 4.8 cm$^{-2}$ (0.75 sq inch). The dolly was bonded to the surface of the flame sprayed aluminium coating using a cyanoacrylate adhesive designated CA-5 sold by 3M Company. The bond was allowed to cure for 24 hours although 80% of the bond strength may be reached after 1 to 2 hours. The CA-5 adhesive is rated at a tensile strength of up to 350 kg cm$^{-2}$ (5,000 psi). The coating testing apparatus was then attached to the dolly and the pressure in the piston chamber was increased until a gauge pressure of 19 kg cm$^{-2}$ (270 psi) was noted. Based on the size of the piston and surface area of the dolly, the calculated tensile loading was 71 kg cm$^{-2}$ (1,010 psi). Since the coating did not separate from the substrate at this pressure, the coating successfully met the specification.

Whilst certain broad aspects and specific features of method and apparatus have been described herein, modifications may be envisaged by persons skilled in the art and the disclosure hereof is intended to encompass any such modifications.

**Claims**

1. A method of testing an adhesive bond of a coating to a substrate, comprising providing a dolly, bonding said dolly to the coating with bonding means having a bond strength in excess of the strength of the adhesive bond between the coating and the substrate, attaching piston and cylinder means to the dolly, applying pressure to the piston and cylinder means to apply a tensional force to the dolly and coating and increasing the pressure to a predetermined, monitored pressure at which a tensile force applied to the dolly meets a minimum specification for said bond, said tensional force being limited to that which meets said minimum specification whereby destruction of the adhesive bond of the coating to the substrate may be avoided; characterised in that said dolly has a generally axially centered opening therethrough and said piston and cylinder means include a generally axially centered ram which passes through said dolly opening, said ram being forced into pressure engagement against the coating by said application of pressure to the piston and cylinder means and said increase in pressure to a predetermined, monitored pressure at which a tensile force applied to the dolly meets a minimum specification for said bond, the tensional force being limited to that which meets said minimum specification whereby destruction of the adhesive bond of the coating to the substrate may be avoided.

2. A method as claimed in claim 1 further including the step of removing the piston and cylinder means and the ram from the dolly after the completion of the testing process.

3. A method as claimed in claim 1 or 2 further including the step of causing the bonding means between the dolly and the coating to fail after completion of the testing process.

4. A method as claimed in claim 3 wherein said step of causing said bonding means to fail comprises heating said bonding means.

5. A method as claimed in claim 4 wherein the step of heating said bonding means comprises heating said dolly at a point remote from said bonding means.

6. A method as claimed in claim 3 wherein said step of causing said bonding means to fail comprises striking said dolly such that an impact from the striking causes the bonding means to shatter.

7. A method as claimed in claim 3 wherein said step of causing said bonding means to fail comprises solvating said bonding means with a solvent.

**Patentansprüche**

1. Verfahren zur Prüfung einer Haftfestigkeit einer Beschichtung an einem Substrat, umfassend das Bereitstellen eines Halters, Anheften des Halters an die Beschichtung mit Haftmitteln, die eine die Haftstärke zwischen der Beschichtung und dem Substrat übersteigende Haftfestigkeitsstärke haben, Befestigen von Kolben- und Zylindermitteln an dem Halter, Anlegen von Druck an die Kolben- und Zylindermittel, um eine Zugkraft an den Halter und der Beschichtung anzulegen, und Erhöhen des Druckes zu einem vorbestimmten überwachten Druck, bei dem eine Zugkraft an den Halter angelegt wird, welche einer Minimalspezifikation für die Festigkeit genügt, wobei die Zugkraft begrenzt ist, so daß sie der Minimalspezifikation genügt, bei der eine Zerstörung der Haftbindung der Beschichtung an dem Substrat nicht stattfinden darf; dadurch gekennzeichnet, daß der Halter eine im wesentlichen axial zentrierte Öffnung dadurch hat und die Kolben- und Zylindermittel einen im wesentlichen axial zentrierten Stößel umfassen, der durch die Öffnung des Halters verläuft, wobei der Stößel in Preßeingriff gegen die Beschichtung durch Anlegen von Druck auf die Kolben- und Zylindermittel gedrückt und der Druck zu einem vorbestimmten überwachten Druck erhöht wird, bei dem eine an den Halter angelegte Zugkraft einer Minimalspezifikation für die Festigkeit genügt, wobei die Zugkraft begrenzt ist, so daß diese der Minimalspezifikation genügt, bei der die Zerstörung der Haftbindung der Beschichtung an dem Substrat nicht stattfinden darf.

2. Verfahren nach Anspruch 1 weiterhin den Schritt umfassend, nach Beendigung des Prüfprozesses die Kolben- und Zylindermittel und den Stößel von dem Halter zu entfernen.

3. Verfahren nach Anspruch 1 oder 2 weiterhin den Schritt umfassend, nach Beendigung des Prüfprozesses ein Ablösen der Haftmittel zwischen dem Halter und der Beschichtung zu bewirken.

4. Verfahren nach Anspruch 3, bei dem der Schritt, ein Lösen der Haftmittel zu bewirken, ein Erwärmen der Haftmittel umfaßt.

5. Verfahren nach Anspruch 4 bei dem der Schritt, die Haftmittel zu erwärmen, ein Erwärmen des Halters bis zu einem Punkt entfernt von den Haftmitteln umfaßt.

6. Verfahren nach Anspruch 3 bei dem der Schritt, ein Lösen der Haftmittel zu bewirken, ein Anschlagen an den Halter umfaßt, so daß die Wucht des Anschlagens ein Zerbrechen der Haftmittel bewirkt.

7. Verfahren nach Anspruch 3 bei dem der Schritt, ein Lösen der Haftmittel zu bewirken, ein Auflösen der Haftmittel mit einem Lösungsmittel umfaßt.

**Revendications**

1. Procédé d'essai d'une liaison adhésive formée entre un revêtement et un substrat, comprenant l'utilisation d'une tubulure, le collage de la tubulure au revêtement avec des moyens de collage ayant une résistance de liaison qui dépasse la résistance de la liaison adhésive formée entre le revêtement et le substrat, la fixation d'un vérin à la tubulure, l'application d'une pression au vérin afin qu'une force de traction soit appliquée à la tubulure et au revêtement, et l'augmentation de la pression jusqu'à une valeur contrôlée prédéterminée à laquelle une force de traction appliquée à la tubulure correspond à une spécification minimale pour la liaison, la force de traction étant limitée à celle qui correspond à la spécification minimale si bien que la destruction de la liaison adhésive du revêtement au substrat peut être évitée, caractérisé en ce que la tubulure est traversée par une ouverture centrée axialement de façon générale, et le vérin comprend un poussoir centré axialement de manière générale et passant par l'ouverture de la tubulure, le poussoir étant pressé au contact du revêtement par ladite application de pression au vérin et par l'augmentation de la pression jusqu'à une valeur contrôlée prédéterminée à laquelle la force de traction appliquée à la tubulure correspond à une spécification minimale pour ladite liaison, la force de traction étant limitée à celle qui correspond à la spécification minimale si bien que la destruction de la liaison adhésive du revêtement au substrat peut être évitée.

2. Procédé selon la revendication 1, comprenant en outre l'étape d'extraction du vérin et du poussoir de la tubulure après la fin de l'opération d'essai.

3. Procédé selon la revendication 1 ou 2, comprenant en outre une étape de rupture des moyens de collage entre la tubulure et le revêtement après la fin de l'opération d'essai.

4. Procédé selon la revendication 3, dans lequel l'étape de rupture des moyens de collage comprend le chaufage de ces moyens de collage.

5. Procédé selon la revendication 4, dans lequel l'étape de chauffage des moyens de collage comprend le chauffage de la tubulure à un emplacement distant de ces moyens de collage.

6. Procédé selon la revendication 3, dans lequel l'étape de rupture des moyens de collage comprend la frappe de la tubulure de manière que le choc dû à la frappe provoque une rupture des moyens de collage.

7. Procédé selon la revendication 3, dans lequel l'étape de rupture des moyens de collage comporte la solvatation de ces moyens de collage par un solvant.

FIG. 1

FIG. 2

FIG. 3

EP 0 244 519 B1